**Europäisches Patentamt**

**European Patent Office**

**Office européen des brevets**

(10)

(11) Publication number: **0 249 764**
**B1**

# (12) EUROPEAN PATENT SPECIFICATION

(45) Date of publication of patent specification: **23.01.91**

(51) Int. Cl.⁵: **A 23 G 3/00**

(21) Application number: **87107324.3**

(22) Date of filing: **20.05.87**

(54) Gum for use in confectionery.

(30) Priority: **22.05.86 DK 2406/86**

(43) Date of publication of application:
**23.12.87 Bulletin 87/52**

(45) Publication of the grant of the patent:
**23.01.91 Bulletin 91/04**

(84) Designated Contracting States:
**BE CH DE ES FR GB IT LI NL SE**

(56) References cited:
**DE-A-2 135 169**
**FR-A-2 328 739**

**FOOD SCIENCE AND TECHNOLOGY, 77-04-
L0316, abstract no. 77020836; F. HEINZ: "Soft
sweets containing pectin".**

**JAPAN PATENT INFORMATION
ORGANIZATION, vol. 6, no. 11, page 56,
2000667.**

**JAPAN PATENT INFORMATION
ORGANIZATION, vol. 8, no. 232, page 94,
2000612.**

(73) Proprietor: **A/S Kobenhavns Pektinfabrik**
**DK-4623 Lille Skensved (DK)**

(72) Inventor: **Buhl, Steen**
**Mantuavej 15**
**DK-2300 Copenhagen S. (DK)**
Inventor: **Rolin, Claus**
**Aldershvilevej 147**
**DK-2880 Bagsvaerd (DK)**
Inventor: **Christensen, Steen Hojgaard**
**Baekkeskovvej 47**
**DK-2700 Bronshoj (DK)**

(74) Representative: **Patentanwälte Leinweber &
Zimmermann**
**Rosental 7/II Aufg.**
**D-8000 München 2 (DE)**

**Description**

The present invention relates to a gum based on a mixture of gelatine and pectin for use in confectionery and a confectionery containing it; in particular, the present invention relates to a gum based on a mixture of gelatine and pectin wherein the ratio of gelatine to pectin is between 1:4 and 4:1, for use in confectionery as well as a confectionery, in particular pastilles containing the same.

Gum arabic is widely used in various types of confectionery, such as liquorice pastilles, fruit pastilles, wine gum and chewing gum. Gum arabic exhibits a number of advantageous properties, the most important being that it is soluble in water in an amount of up to 40% based on the weight of the water, that the solution thus formed has a low viscosity, that the solution does not gel at low pH values, that a solution of gum arabic can be moulded without tail formation at a temperature of about 65°C and that confectionery, such as pastilles, containing gum arabic has a pleasant gum-like texture.

Gum arabic is derived from the sap of the acacia tree and the supply and price of gum arabic are highly dependent on climatic conditions.

A serious drought in the countries in Africa (Sudan, Ethiopia, Senegal and Nigeria) which are the main producers of gum arabic has reduced the supply of gum arabic and causes substantial price increases during the later years.

Therefore, it has been attempted to develop gums which are capable of wholly or partially replacing gum arabic. An example of such a gum is modified starch which, however, does not possess all the advantageous properties of gum arabic. Thus, modified starch does not produce a satisfactory texture and pastilles containing modified starch tend to adhere to the palate and the teeth. Furthermore, modified starch reduces the effect of added flavour additives and cannot be used in sugar-free products.

It is well known that a firm gum-like structure can be imparted to some types of confectionery, such as wine gum, by using gelatine containing a small amount of pectin as gum component.

It is also well known that by incorporating pectin in gelatine, the texture of the resulting product is improved, and that by using pectin alone for the preparation of pastilles the texture of such pastilles will be unsatisfactory.

From FR—A—2 328 739 it is known a gel comprising a gelling agent in the form of a polysaccharide such as high methoxyl pectin and modified gelatine. As gelling agent a mixture of gelatine and pectin is used having a weight ratio of gelatine to pectin of 4:1. However, this reference does not contain any information as to the molecular weight of the pectin component although the molecular weight of the pectin component is very important in order to obtain a gum having the desired properties.

Since the reference does not contain any specific data in regard to the average molecular weight of the used pectin it must be assumed that ordinary pectin which up to now have been used in confectionery in a mixture of gelatin and which have an average molecular weight of between 90 000 and 120 000 are used therein.

A serious drawback of the well known mixtures of gelatine and pectin is that the viscosity of the aqueous solutions prepared therefrom is too high to permit them to be used in the conventional moulding of pastilles and that the viscosity cannot be reduced by using smaller amounts of gelatine and pectin because the desired texture then cannot be obtained.

Therefore, it is an object of the present invention to find a gum based on a mixture of gelatine and pectin which does not exhibit the drawbacks of the prior art mixtures of gelatine and pectin.

Surprisingly, it has been found that the above drawbacks of the prior art mixtures of gelatine and pectin can be eliminated by using a special type of pectin.

Thus, the subject-matter of the present invention is a gum based on a mixture of gelatine and pectin wherein the ratio of gelatine to pectin is between 1:4 and 4:1, for use in confectionery, which is characterized in that it comprises pectin of an average molecular weight of between 15 000 and 60 000 and a degree of esterification of 50% to 75%.

According to a preferred embodiment of the present invention the average molecular weight of the pectin is between 25 000 and 40 000 and the degree of esterification of the pectin is preferably from 55 to 70%.

The gelatine used in the gum of the present invention preferably has an isoelectric point of from 7 to 9.

A special advantage of the gum according to the invention is that it results in a final product having the desired properties even if used in relatively small amounts, viz. in amounts of from 5 to 25 and more particularly from 10 to 15% by weight. For comparison purpose it should be mentioned that gum arabic normally is used in corresponding final products in an amount of about 35% by weight.

When dissolved in water together with gelatine, pectins of the above mentioned low molecular weight produce solutions having a substantially lower viscosity than by using the same amount of normal pectins. This results in a reduced tendency for tail formation when moulding for example pastilles.

A mixture of the components used for the preparation of for example pastilles, i.e. gum, water, flavour additives, such as liquorice powder and ammonium chloride, buffer, sugar and glucose syrup, should preferably have a maximum viscosity of 3 000 cP (3.0 Pa · s) at 65°C and a dry matter content of 65°C Brix measured with a refractometer. This requirement is most advantageously met with pectins of an average molecular weight of between 25 000 and 40 000 but as mentioned above, pectins of average molecular weights of up to 60 000 can also be used. In the latter case, a relatively small amount of pectin is normally used in admixture with the gelatine.

As mentioned above the degree of esterification of the pectin should be at least about 50% and not more than about 75%. The degree of esterification is the extent to which the galacturonic acid groups in the pectin have been esterified with methyl alcohol.

Pectins with a degree of esterification of below about 50% are relatively strongly reactive which means that they tend to react with calcium ions which for example are present in liquorice powder and to produce an undesired increase of viscosity. On the other hand, a high degree of esterification, i.e. above about 75%, has the undesired effect that the pectin tends to gel and to produce a grainy and consequently inferior texture.

Thus, the selection of degree of esterification is a compromise between viscosity and texture, it is preferred to use pectin having a degree of esterification of from 55 to 70%.

As mentioned above, the ratio of pectin to gelatine can vary within relatively wide ranges. In general, the gelatine has a softening effect on the texture of the final products, i.e. an elastic texture is obtained, whereas pectin imparts to the final product a relatively hard texture.

However, by using pectin and gelatine in relative amounts which fall within the above mentioned range, it is possible to obtain a texture which is similar to the texture obtained with gum arabic.

The gelatine used is preferably gelatine which has been treated with acid, i.e. gelatine having an isoelectric point of from 7 to 9. Thus, it may be difficult to dissolve base treated gelatine which has an isoelectric point of about 5 at the pH value which is normally used in the moulding of the final product, i.e. a pH value of from 4.6 to 4.8.

The invention also relates to confectionery, in particular pastilles, containing the gum described above.

The confectionery of the present invention containing a gum based on a mixture of gelatine and pectin wherein the ratio of gelatine to pectin is between 1:4 and 4:1 is characterized in that the gum comprises pectin of an average molecular weight of between 15 000 and 60 000 and a degree of esterification of 50% to 75%.

The gum is preferably present in an amount of from 5 to 25% by weight.

The confectionery according to the present invention preferably contains a mixture of the gum of the present invention and gum arabic.

The invention will now be described in further detail with reference to the following example which illustrates the preparation of pastilles containing the gum according to the invention, optionally in admixture with gum arabic, and which illustrates various properties of such pastilles compared with prior art pastilles.

## Example

### a) Preparation of pectin

2.50 kg dry citrus peels were extracted for 4 hours with 50 l demineralized water at a temperature of 90°C and the mixture was acidified to a pH value of 2.0 with nitric acid at the start of the extraction. Insoluble components were removed by filtration. The filtrate thus obtained was ion exchanged with a cation exchanger (Amberlite® 120) to remove calcium ions. The pectin was subsequently precipitated in 80% isopropanol having a pH value of 3.0—4.0.

The precipitated pectin was washed in 60% isopropanol, pressed and dried and finally it was sieved on a 24 DIN sieve. The pectin thus obtained, pectin A, had the following properties:

| | |
|---|---|
| Degree of esterification (DE): | 68.3% |
| Average molecular weight (MW): | 53,000. |

The following pectins, B—E, were prepared in an analogous manner:

| | B | C | D | E |
|---|---|---|---|---|
| DE, % | 65.7 | 67.9 | 55.0 | 61.4 |
| AGA*, % | 74.4 | 74.9 | 78.8 | 73.3 |
| Pure pectin, % | 97.0 | 97.7 | 98.7 | 98.0 |
| pH of 1% solution | 3.95 | 3.20 | 3.03 | 3.88 |
| MW | 39,000 | 50,000 | 27,000 | 19,000 |

*Contents of anhydrogalacturonic acid.

The average molecular weight (MW) was determined by determining the relative viscosity of a 0.1% by weight pectin solution in the presence of sodium hexamethaphosphate (sequestrant). The determination was effected by introducing into a beaker provided with a stirring magnet about 90 g sodium hexamethaphosphate solution formed by dissolving 20 g sodium hexamethaphosphate in 200 ml ion exchanged boiled water and having a pH value of 4.5. 100 mg pectin washed with acid were added while stirring and the stirring was continued until the pectin had been totally dissolved. Then further sodium hexamethaphosphate solution was added until a total amount of 100.0 g had been added. The solution thus formed was filtered and 5.00 ml of the solution were introduced into a Silber Brand No. 111 viscosimeter placed in a water bath maintained at a temperature of 25°C±0.3°C for 15 minutes. At least 5 measurements of the discharge time for each solution were made and the average of the measurements was calculated.

The relative viscosity is calculated on the basis of the formula:

$$\eta_r = \frac{(t_o - K/t_o)}{(t_h - K/t_h)}$$

wherein $t_o$ and $t_h$ are discharge times for the pectin solution and the sodium hexamethaphosphate solution, respectively, and wherein

$$K = \frac{Q \cdot t_v^2}{Q + (0.226 \cdot L \cdot t_v)}$$

wherein Q is the volume of the bulb in $cm^3$, L=the length of the capillary tube in cm and $t_v$ is the discharge time for water in seconds.

The molecular weight is then calculated based on the formula:

$$M = 1.277 \cdot 10^6 \ (\eta_r^{1/6} - 1) \ g/mole,$$

and the calculated value is rounded off to the closest multiple of 1000.

The DE and DA values were determined by methods described in "Food Chemicals Codex 3rd edition", pp. 215—217, National Academy Press, Washington D.C., 1981.

b) Preparation of solutions

The following basic composition was used:

|  | I |  |
|---|---|---|
| Gum | 40 | g |
| Water | 450 | g |
| Liquorice powder | 31 | g |
| Ammonium chloride | 26.5 | g |
| Trisodiumcitrate, $2H_2O$ | 4.5 | g |
| Saccharose | 246 | g |
| Glucose syrup (84% solids), 40 DE | 357 | g |
|  | 1155 | g |

By increasing the concentration of gum to 60, 80, 100, 120 and 150 g, respectively, and by reducing the contents of saccharose and glucose syrup correspondingly, five further compositions which in the following are designated II, III, IV, V and VI were obtained.

The water was heated to 80—85°C and transferred to a kitchen blender. The gum was introduced into the blender and the mixture stirred for 10 minutes so as to dissolve the gum. The solution was heated to 95°C, and a dry mixture of liquorice powder, ammonium chloride, trisodiumcitrate, $2H_2O$ and sugar was added. After a period of about 5 minutes, the added components had been dissolved. Subsequently, the glucose syrup was added while stirring. Finally, the dry matter content (65%), was controlled and the pH value was measured.

c) Preparation of pastilles

A tray was filled with wheat flour which was uniformly distributed over the tray. Depressions having a shape corresponding to that of the desired pastilles were formed in the layer of the flour with a template. A pastille forming solution of a temperature of about 66°C was introduced in each depression in an amount of about 1 g dry matter. After the moulding operation had been completed, the tray was placed in a dryer and the moulded pastilles were dried at 72°C for 40—48 hours under forced air circulation. The pastilles thus formed had a dimaeter of 16 mm and a thickness of 3—4 mm.

A suitable number of pastilles were weighed and subsequently dissolved in water of a temperature of 60—65°C, whereafter a refractometer measurement was effected. The dry matter content of the pastilles was determined based on the weight results and the refractometer measurements.

d) Evaluation of moulding conditions and the organoleptic properties of the pastilles

When moulding pastilles, it is important that the supply of solution to the moulds (cavities) used can be stopped momentarily without tail formation. The formation of tails after discontinuing the supply of solution during the moulding operation was observed and registered.

The pastilles prepared were dried to a dry matter content of 94—96% and were subjected to an organoleptic evaluation by a panel and at the same time the pastilles were compared with reference pastilles prepared by using gum arabic as the sole gum and form a solution having the following composition:

| | |
|---|---|
| Gum arabic | 350 g |
| Water | 425 g |
| Liquorice powder | 31 g |
| Ammonium chloride | 26.5 g |
| Trisodiumcitrate, 2H$_2$O | 4.2 g |
| Sugar | 107 g |
| Glucose syrup (84% dry matter), 40 DE | 156 g |
| | 1100 g |

In the organoleptic appraisal the following properties were evaluated:

1) Whether the pastilles could be broken by the fingers,

2) the hardness/softness of the pastilles compared with that of the reference pastilles and the possibility of making them break when they are biten,

3) the elastic properties of the pastilles after having attained the temperature of the mouth, and more particularly (a) whether the pastilles can be bent between the teeth without cracking, (b) whether it is possible to bite through the pastilles with the front teeth, (c) whether the pastilles adhere to the teeth when they are chewed and (d) whether the pastilles are smooth when being sucked,

4) the liberation of flavours from the pastilles, and

5) the solubility of the pastilles in the mouth when they are sucked and compared with that of the reference pastilles.

(e) Results

a. Two solutions prepared in the manner described above and by using composition IV, i.e. with a concentration of gum of about 10% were prepared. The gum used was a mixture of pectin B and acid treated gelatine having an isoelectric point of 7—9.

The composition of the gum and the viscosity (at 65°C) of the solutions thus formed were the following:

| | Pectin B, % | Gelatine, % | Viscosity, cP (Pa · s) |
|---|---|---|---|
| Solution No. 1 | 20 | 80 | 1827 (1.827) |
| Solution No. 2 | 38 | 62 | 1862 (1.862) |

As will appear from the above table, the viscosity does not increase significantly with increasing concentration of pectin, and in both cases the viscosity is below 3000 cP (3.0 Pa · s).

Pastilles were prepared from the two solutions and the moulding proceeded without tail formation.

During the organoleptic appraisal it was found that both types of pastilles could be broken between the fingers, the pastilles prepared from solution No. 1 being somewhat elastic (gelatine-like). With increasing pectin concentration the pastilles were felt harder in the mouth, and the solubility decreased.

By comparing the pastilles with the reference pastilles it was found that the two types of pastilles had essentially the same solubility, hardness and texture.

b. Three additional solutions having different concentrations of the gum were prepared. In all three solutions pectin B and acid treated gelatine were used in a ratio of 38% pectin B and 62% gelatine. The compositions of the three solutions and their viscosities were the following:

| | Composition | % gum | Viscosity, cP (Pa · s) |
|---|---|---|---|
| Solution No. 3 | IV | 10 | 1870 (1.870) |
| Solution No. 4 | V | 12 | 2670 (2.670) |
| Solution No. 5 | VI | 15 | 2863 (2.863) |

The moulding of the solutions proceded without tail formation. During the organoleptic appraisal it was found that all pastilles could be broken between the fingers. The hardness of the pastilles in the mouth was found to increase with increasing contents of gum.

The pastilles prepared from solutions Nos. 4 and 5 were better, i.e. were more similar to the reference pastilles than pastilles prepared from solution No. 3. Pastilles obtained from solutions Nos. 4 and 5 exhibited essentially the same organoleptic properties and melted faster in the mouth than the reference pastilles.

c. The effect of the various pectins was determined by preparing three solutions based on pectin B, C and E. All solutions were based on composition IV and thus contained about 10% gum.

|  | Pectin | Viscosity, cP (Pa · s) |
| --- | --- | --- |
| Solution No. 6 | B | 1633 (1.633) |
| Solution No. 7 | C | 2037 (2.037) |
| Solution No. 8 | E | 1092 (1.092) |

All solutions could be moulded without tail formation.

The taste panel found that the pastilles based on solution No. 7 exhibited a better hardness and were dissolved more slowly in the mouth than pastilles based on solution No. 6. Pastilles based on solution No. 8 were clearly more soft and dissolved more quickly in the mouth than pastilles based on solutions Nos. 6 and 7.

d. The effect of the degree of esterification (DE) was investigated by preparing pastilles comprising a gum based on pectin B and pectin D which gum was used in a concentration of 12%. The gum consisted in both cases of 38% pectin (B or D) and 62% acid treated gelatine.

The following results were obtained:

|  | Composition | Pectin | DE | Viscosity, cP (Pa · s) |
| --- | --- | --- | --- | --- |
| Solution No.  9 | V | B | 65.7 | 2670 (2.670) |
| Solution No. 10 | V | D | 55.0 | 2986 (2.986) |

In spite of the fact that solution No. 10 contains pectin having a lower average molecular weight than solution No. 9, the viscosity is higher. This is due to i.a. that the reactivity of the pectin relative to $Ca^{++}$ increases with decreasing degree of esterification. $Ca^{++}$ originate partly from the water used and partly from the liquorice powder.

The taste panel found that pastilles prepared from solution No. 8 were clearly superior to pastilles prepared from solution No. 9 and that the latter pastilles exhibited the same properties with respect to hardness in the mouth and solubility as the reference pastilles.

e. The effect of partially replacing gum arabic with a mixture of pectin and gelatine was investigated in the preparation of a solution having the following composition. The amount of pectin (pectin B) and gelatine in the mixture of these two components was 38 and 62%, respectively:

| | |
| --- | --- |
| Gum arabic | 200.0 g |
| Water | 411.0 ml |
| Pectin/gelatine | 20.0 g |
| Liquorice powder | 31.0 g |
| Ammonium chloride | 26.5 g |
| Trisodiumcitrate, $2H_2O$ | 4.5 g |
| Saccharose | 166.0 g |
| Glucose syrup (84% dry matter) | 241   g |
| | 1100.0 g |

Gum arabic was dispersed in water having a temperature of 60—70°C by means of a blender, and the mixture thus formed was allowed to stand overnight at 25°C in order to cause the gum arabic to be totally dissolved.

The mixture was heated to 85°C, and pectin/gelatine was added. After stirring for about 10 minutes with the blender, the remaining components were added as described in paragraph b.

The solution thus obtained has the following composition:

|  | Pectin B, % | Gelatine, % | Gum arabic, % | Viscosity, cP (Pa · s) |
| --- | --- | --- | --- | --- |
| Solution No. 11 | 0.76 | 1.24 | 20.0 | 1493 (1.493) |

The moulding proceded without problems and without tail formation.

Organoleptically, the taste panel could not distinguish the pastilles formed from the reference pastilles.

# EP 0 249 764 B1

## Claims

1. A gum based on a mixture of gelatine and pectin wherein the ratio of gelatine to pectin is between 1:4 and 4:1, for use in confectionery, characterized in that it comprises pectin of an average molecular weight of between 15,000 and 60,000 and a degree of esterification of 50% to 75%.

2. The gum according to claim 1, characterized in that the average molecular weight of the pectin is between 25,000 and 40,000.

3. The gum according to claim 1 or 2, characterized in that the degree of esterification of the pectin is from 55 to 70%.

4. The gum according to any of claims 1 to 3, characterized in that the gelatine has an isoelectric point of from 7 to 9.

5. Confectionery containing a gum based on a mixture of gelatine and pectin wherein the ratio of gelatine to pectin is between 1:4 and 4:1 for use in confectionery, characterized in that the gum comprises pectin of an average molecular weight of between 15,000 and 60,000 and a degree of esterification of 50% to 75%.

6. Confectionery according to claim 5, characterized in that the gum is present in an amount of from 5 to 25% by weight.

7. Confectionery according to claim 5, characterized in that the gum also comprises gum arabic.

## Patentansprüche

1. Gummi auf Basis eines Gelatine/Pektin-Gemisches mit einem Verhältnis Gelatine:Pektin zwischen 1:4 und 4:1 für Süßwarenprodukte, dadurch gekennzeichnet, daß es Pektin mit einem durchschnittlichen Molekulargewicht zwischen 15 000 und 60 000 und einem Veresterungsgrad von 50 bis 75% enthält.

2. Gummi nach Anspruch 1, dadurch gekennzeichnet, daß das durchschnittliche Molekulargewicht des Pektins zwischen 25 000 und 40 000 liegt.

3. Gummi nach Anspruch 1 oder 2, dadurch gekennzeichnet, daß der Veresterungsgrad des Pektins 55 bis 70% beträgt.

4. Gummi nach einem der Ansprüche 1 bis 3, dadurch gekennzeichnet, daß die Gelatine einen isoelektrischen Punkt von 7 bis 9 aufweist.

5. Süßwaren, die ein Gummi auf Basis eines Gelatine/Pektin-Gemisches mit einem Verhältnis Gelatine:Pektin zwischen 1:4 und 4:1 für Süßwaren enthalten, dadurch gekennzeichnet, daß das Gummi Pektin mit einem durchschnittlichen Molekulargewicht zwischen 15 000 und 60 000 und einem Veresterungsgrad von 50 bis 75% enthält.

6. Süßwaren nach Anspruch 5, dadurch gekennzeichnet, daß das Gummi in einer Menge von 5 bis 25 Gew.-% vorliegt.

7. Süßwaren nach Anspruch 5, dadurch gekennzeichnet, daß das Gummi auch Gummi Arabikum umfaßt.

## Revendications

1. Gomme à base d'un mélange de gélatine et de pectine où le rapport de la gélatine à la pectine est compris entre 1:4 et 4:1, pour une utilisation en confiserie, caractérisée en ce qu'elle contient de la pectine d'un poids moléculaire moyen compris entre 15.000 et 60.000 et d'un degré d'estérification de 50% à 75%.

2. Gomme selon la revendication 1, caractérisée en ce que le poids moléculaire moyen de la pectine est compris entre 25.000 et 40.000.

3. Gomme selon la revendication 1 ou 2, caractérisée en ce que le degré d'estérification de la pectine est compris entre 55 et 70%.

4. Gomme selon l'une quelconque des revendications 1 à 3, caractérisée en ce que la gélatine a un point isoélectrique de 7 à 9.

5. Confiserie contenant une gomme à base d'un mélange de gélatine et de pectine où le rapport de la gélatine à la pectine est compris entre 1:4 et 4:1 pour une utilisation en confiserie, caractérisée en ce que la gomme contient de la pectine d'un poids moléculaire moyen compris entre 15.000 et 60.000 et d'un degré d'estification de 50% à 75%.

6. Confiserie selon la revendication 5, caractérisée en ce que la gomme est présente en une quantité de 5 à 25% en poids.

7. Confiserie selon la revendication 5, caractérisée en ce que la gomme contient également de la gomme arabique.